(19) **Europäisches Patentamt**
**European Patent Office**
**Office européen des brevets**

(11) **EP 4 067 076 A1**

(12) **EUROPEAN PATENT APPLICATION**
published in accordance with Art. 153(4) EPC

(43) Date of publication:
**05.10.2022 Bulletin 2022/40**

(21) Application number: **20892977.8**

(22) Date of filing: **11.11.2020**

(51) International Patent Classification (IPC):
***B32B 27/00*** (2006.01)    ***B32B 27/32*** (2006.01)
***C09J 109/00*** (2006.01)    ***C09J 123/08*** (2006.01)
***C09J 123/26*** (2006.01)    ***B32B 7/12*** (2006.01)

(52) Cooperative Patent Classification (CPC):
**B32B 7/12; B32B 27/00; B32B 27/32;**
**C09J 109/00; C09J 123/08; C09J 123/26**

(86) International application number:
**PCT/JP2020/042128**

(87) International publication number:
**WO 2021/106576 (03.06.2021 Gazette 2021/22)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.11.2019 JP 2019216781**

(71) Applicant: **TOYOBO CO., LTD.**
**Osaka-shi**
**Osaka 5300001 (JP)**

(72) Inventors:
• **TAKATA, Tomoka**
  **Takasago-shi, Hyogo 676-0082 (JP)**
• **KASHIHARA, Kenji**
  **Takasago-shi, Hyogo 676-0082 (JP)**

(74) Representative: **Vossius & Partner**
**Patentanwälte Rechtsanwälte mbB**
**Siebertstraße 3**
**81675 München (DE)**

(54) **POLYOLEFIN-BASED ADHESIVE COMPOSITION AND LAMINATE**

(57)    Provided is an adhesive composition that exhibits good adhesion between a polyolefin resin substrate and a different type of material even when no curing agent is used, enables bonding at low temperatures, and has excellent storage stability.

An adhesive composition comprising an acid-modified polyolefin (A) and an ethylene-$\alpha$-olefin-diene rubber (B).

EP 4 067 076 A1

**Description**

Technical Field

The present invention relates to an adhesive composition and a laminate.

Background Art

Polyolefin-based resins, such as polypropylene and polyethylene, have been recently widely used as sheets, films, molded articles, and the like because they are inexpensive and have many excellent properties, such as moldability, chemical resistance, water resistance, and electrical characteristics.

However, unlike polar substrates of, for example, polyurethane-based resins, polyamide resins, acrylic resins, and polyester resins, substrates made of polyolefin-based resins (referred to below as "polyolefin-based substrates") are nonpolar and crystalline and thus have the disadvantage that coating and bonding are difficult.

In recent years, there has been a growing demand for excellent adhesion not only between polyolefin-based substrates, but also between a polyolefin-based substrate and a different type of material, such as a polar plastic substrate (e.g., vinyl chloride (PVC) or polyester) or a metal.

As the main component of an adhesive between a polyolefin-based resin substrate and a different type of material, an adhesive composition

containing a thermoplastic linear copolymer

as a base resin, a modified polyolefin resin, and a tackifier (Patent Literature (PTL) 1), an adhesive composition containing a modified polyolefin, an aliphatic polyester-based resin, an olefin-based resin, and a tackifier (PTL 2), an adhesive composition

containing a modified polyolefin, a thermoplastic resin, and a tackifier (PTL 3), and the like have been proposed.

Citation List

Patent Literature

> PTL 1: JP2004-292716A
> PTL 2: JP2014-234400A
> PTL 3: JP2016-089060A

Summary of Invention

Technical Problem

However, although all of the adhesive compositions proposed above show good adhesion between a polyolefin resin substrate and a metal (aluminum) and between a polyolefin resin substrate and a polyester (PET) substrate, the adhesion between a substrate other than aluminum or PET and a polyolefin resin substrate is unknown. In addition, they are all hot-melt adhesives, which require bonding at a high temperature of 180°C. An object of the present invention is to provide an adhesive composition that shows good adhesion between polyolefin resin substrates and various polar plastic substrates or metal substrates other than polyolefin resin substrates and that enables bonding at low temperatures.

Solution to Problem

To achieve the above object, the present inventors conducted extensive research and found that a specific combination of a modified polyolefin and an ethylene-$\alpha$-olefin-diene rubber is effective. The present invention was thus proposed. Specifically, the present invention includes the following.

> (1) An adhesive composition comprising an acid-modified polyolefin (A) and an ethylene-$\alpha$-olefin-diene rubber (B), the ethylene-$\alpha$-olefin-diene rubber (B) being present in an amount of 1 to 100 parts by mass per 100 parts by mass of the acid-modified polyolefin (A).
> (2) An adhesive composition,
>
> > wherein the ethylene-$\alpha$-olefin-diene rubber (B) has a weight average molecular weight

(Mw) of 1,000 or more
and 100,000 or less.

(3) The adhesive composition according to Item (1) or (2), wherein the acid-modified polyolefin (A) has an acid value of 2 to 50 mgKOH/g.
(4) The adhesive composition according to Items (1) to (3) , further comprising a solvent (C).
(5) The adhesive composition according to any one of Items (1) to (4), wherein the solvent (C) comprises an alicyclic hydrocarbon solvent (C1) and an ester-based solvent or ketone-based solvent (C2) .
(6) The adhesive composition according to any one of Items (1) to (5), wherein the mass ratio of the alicyclic hydrocarbon solvent (C1) to the ester-based solvent or ketone-based solvent (C2), (C1)/(C2), is 95/5 to 50/50.
(7) The adhesive composition according to any one of Items (1) to (6) for use in bonding a polyolefin resin substrate 1 and a substrate 2 different from the substrate 1.
(8) The adhesive composition according to any one of Items (1) to (7), wherein the acid-modified polyolefin (A) comprises propylene in an amount of 60 mol% or more.
(9) A laminate comprising a polyolefin resin substrate 1 and a substrate 2 different from the substrate 1, the substrate 1 and the substrate 2 being bonded with the adhesive composition according to any one of Items (1) to (8).

Advantageous Effects of Invention

The adhesive composition of the present invention comprises an acid-modified polyolefin and an ethylene-α-olefin-diene rubber (B) and exhibits good elongation and excellent adhesion between a nonpolar substrate, such as polyolefin, and a different type of substrate, such as an acrylonitrile-butadienestyrene copolymer (ABS), polycarbonate (PC), or like polar substrates, or metal, even when no curing agent is used. Moreover, since the adhesive composition can be applied by using a dry lamination process, equipment costs can be reduced, and the film thickness can be made thin. Further, the adhesive composition exhibits excellent adhesion even when heat bonding is performed at a low temperature of, for example, 90°C or less, at which the thermal shrinkage effect on polyolefin substrates is small.
The adhesive composition of the present invention exhibits good adhesion not only to polyolefin substrates, but also to substrates of ABS resins, polycarbonates, polyethylene terephthalate (PET), polyvinyl chloride (PVC), acrylic resins, aluminum, and the like, and is thus useful as an adhesive for multi-substrates.
Further, since the adhesive composition of the present invention does not contain a curing agent, it can be easily peeled off from substrates by heat treatment even after bonding.

Description of Embodiments

Embodiments of the present invention are described in detail below.

Acid-Modified Polyolefin (A)

The acid-modified polyolefin (A) used in the present invention is not limited and is preferably obtained by grafting polypropylene with at least one of α,β-unsaturated carboxylic acid and acid anhydride thereof.
As polypropylene, homopolypropylene can be particularly preferably used, and a propylene-α-olefin copolymer can also be used. The propylene-α-olefin copolymer mainly comprises propylene that is copolymerized with an α-olefin. Examples of α-olefins include ethylene, 1-butene, 1-heptene, 1-octene, 4-methyl-1-pentene, vinyl acetate, and the like. These α-olefins can be used singly or in a combination of two or more. Preferred among these α-olefins are ethylene and 1-butene.
The acid-modified polyolefin (A) preferably contains, as an olefin component, propylene in an amount of 60 mol% or more, more preferably 70 mol% or more, even more preferably 80 mol% or more, and still even more preferably 90 mol% or more. The higher the propylene content, the better the adhesion to propylene substrates.
The molar ratio of propylene to 1-butene is preferably such that propylene/1-butene = 100 to 60/0 to 40, more preferably 98 to 65/2 to 35, and even more preferably 90 to 70/10 to 30. When the molar percentage of propylene is 60% or more, excellent adhesion to polyolefin substrates is exhibited.
The total amount of the propylene component and the 1-butene component as olefin components is preferably 50 parts by mass or more, more preferably 55 parts by mass or more, even more preferably 60 parts by mass or more, and particularly preferably 65 parts by mass or more, based on the resin components taken as 100 parts by mass. The total amount of the propylene component and the 1-butene component may be 70 parts by mass. When the total amount of the propylene component and the 1-butene component is 50 parts by mass or more, the adhesion to polyolefin substrates is particularly good.
Examples of the at least one of α,β-unsaturated carboxylic acid and acid anhydride thereof include maleic acid, itaconic acid, citraconic acid, and acid anhydrides thereof. Among these, the acid anhydrides are preferable, and maleic anhydride is more preferable. Specific examples include maleic anhydride-modified polypropylene, maleic anhydride-modified propylene-ethylene copolymers, maleic anhydride-modified propylene-1-butene copolymers, maleic anhydride-modified propylene-ethylene-1-butene copolymers, and the like. These acid-modified polyolefins can be used singly, or in a combination of two or more. Among these, maleic anhydride-modified polypropylene is preferable.

The acid-modified polyolefin (A) preferably has an acid value of 2 to 50 mgKOH/g, more preferably 3 to 40 mgKOH/g, even more preferably 5 to 30 mgKOH/g, and particularly preferably 5 to 16 mgKOH/g. When the acid value is 2 mgKOH/g or more, the adhesive layer exhibits good elongation. When the acid value is 50 mgKOH/g or less, the solution stability at low temperatures tends to be good.

The acid-modified polyolefin (A) may be chlorinated.

The melting point (Tm) of the acid-modified polyolefin (A) is preferably 50°C or more and 130°C or less. The melting point (Tm) of the acid-modified polyolefin (A) is more preferably 55°C or more, and even more preferably 60°C or more. The melting point (Tm) of the acid-modified polyolefin (A) is also more preferably 125°C or less, even more preferably less than 120°C, still even more preferably 115°C or less, and most preferably 110°C or less. When the melting point is 50°C or more, strong cohesive force derived from crystals is attained, and good adhesion is achieved. When the melting point is 130°C or less, solution stability and flowability are good, and operability during bonding is excellent. In addition, bonding can be performed even at low temperatures.

The acid-modified polyolefin (A) preferably has a heat of fusion of 20 to 70 J/g, more preferably 25 to 65 J/g, and most preferably 30 to 60 J/g. When the heat of fusion is not less than the lower limit, strong cohesive force derived from crystals is attained, and good adhesion is achieved. When the heat of fusion is less than the upper limit, gelation is less likely to occur, and good solution stability is attained.

The acid-modified polyolefin (A) preferably has a weight average molecular weight (Mw) of 10,000 to 200,000, more preferably 20,000 to 180,000, even more preferably 30,000 to 160,000, particularly preferably 40,000 to 140,000, and most preferably 50,000 to 100,000. When the weight average molecular weight is 10,000 or more, strong cohesive force is attained, and good adhesion is achieved. When the weight average molecular weight is 200,000 or less, flowability is high, resulting in good operability during bonding, and good solution stability at low temperatures is attained.

The method for producing the acid-modified polyolefin (A) is not particularly limited. Examples of the method include a radical grafting reaction in which a radical species is formed in a polymer serving as a main chain, and unsaturated carboxylic acid and acid anhydride are graft-polymerized using the radical species as a polymerization starting point; and the like.

The radical generator is not particularly limited, and is preferably an organic peroxide. Examples of organic peroxides include, but are not limited to, peroxides, such as di-tert-butyl peroxyphthalate, tert-butyl hydroperoxide, dicumyl peroxide, benzoyl peroxide, tert-butyl peroxybenzoate, tert-butyl peroxy-2-ethylhexanoate, tert-butyl peroxypivalate, methyl ethyl ketone peroxide, di-tert-butyl peroxide, and lauroyl peroxide; azonitriles, such as azobisisobutyronitrile and azobisisopropionitrile; and the like.

These acid-modified polyolefins (A) may be used singly or in a combination of two or more.

Ethylene-$\alpha$-Olefin-Diene Rubber (B)

The adhesive composition of the present invention contains an ethylene-$\alpha$-olefin-diene rubber (B). The presence of the ethylene-$\alpha$-olefin-diene rubber reduces the internal stress after formation of an adhesive film and imparts tackiness, thereby improving adhesion to substrates.

The ethylene-$\alpha$-olefin-diene rubber (B) preferably contains ethylene in an amount of 30 mass% or more, more preferably 35 mass% or more, and even more preferably 40 mass% or more. The ethylene-$\alpha$-olefin-diene rubber (B) also preferably contains ethylene in an amount of 95 mass% or less, more preferably 90 mass% or less, even more preferably 850 mass% or less, and particularly preferably 80 mass% or less.

Examples of the $\alpha$-olefin component of the ethylene-$\alpha$-olefin-diene rubber (B) include $C_{3-20}$ olefins. These olefins can be used singly or in a combination of two or more. As the $\alpha$-olefin, propylene is preferable, and only propylene is more preferable.

The amount of the diene component in the ethylene-$\alpha$-olefin-diene rubber (B) is preferably 3 mass% or more, more preferably 6 mass% or more, and even more preferably 8 mass% or more. The amount of the diene component in the ethylene-$\alpha$-olefin-diene rubber (B) is also preferably 30 mass% or less, more preferably 20 mass% or less, even more preferably 15 mass% or less, and particularly preferably 12 mass% or less.

The ethylene-$\alpha$-olefin-diene rubber (B) preferably has a weight average molecular weight (Mw) of 10,000 or more and 200,000 or less, more preferably 15,000 or more and 180,000 or less, even more preferably 20,000 or more and 160,000 or less, particularly preferably 30,000 or more and 140,000,0 or less, still even more preferably 40,000 or more and 120,000 or less, and most preferably 45,000 or more and 100,000 or less. When the weight average molecular weight is 10,000 or more, the compatibility with the acid-modified polyolefin (A) is favorable, a stress relaxation effect is exhibited, and adhesion tends to be good. When the weight average molecular weight is 100,000 or less, the compatibility with the acid-modified polyolefin (A) is significantly improved.

The amount of the ethylene-$\alpha$-olefin-diene rubber (B) added is preferably 1 part by mass or more and 100 parts by mass or less, more preferably 5 parts by mass or more and 80 parts by mass or less, even more preferably 8 parts by mass or more and 75 parts by mass or less, particularly preferably 12 parts by mass or more and 70 parts by mass or less, and still even more preferably 15 parts by mass or more and 65 parts by mass or less, and most preferably 18 parts by mass or more and 60 parts by mass or less, per 100 parts by weight of the acid-modified polyolefin (A). When the amount of the ethylene-$\alpha$-olefin-diene rubber (B) is 1 part by mass or more, the compatibility with the acid-modified polyolefin (A) is favorable, a stress relaxation effect is exhibited, and adhesion tends to be good. When the amount of the ethylene-$\alpha$-olefin-diene rubber (B) is 100 parts by mass or less, favorable tackiness is exhibited, and adhesion is improved.

The ethylene-$\alpha$-olefin-diene rubber (B) may be in any form. The ethylene-$\alpha$-olefin-diene rubber (B) is particularly preferably semi-solid or liquid at room temperature. When a coating film is formed, high adhesion and good elongation are achieved.

The viscosity of the ethylene-$\alpha$-olefin-diene rubber (B) at 60°C is preferably 100 Pa·S or more and 2,000 Pa·S or less, more preferably 200 Pa·S or more and 1,800 Pa·S or less, even more preferably 300 Pa·S or more and 1,600 Pa·S or less, particularly preferably 400 Pa·S or more and 1,500 Pa·S or less, still even more preferably 500 Pa·S or more and 1,400 Pa·S or less, and most preferably 600 Pa·S or more and 1,300 Pa·S or less. When the viscosity is 100 Pa·S or more, adhesion is exhibited. When the viscosity is 2,000 Pa·S or less, the compatibility with other components is good.

Solvent (C)

The adhesive composition of the present invention may contain a solvent (C). The solvent (C) is not particularly limited as long as it can dissolve or disperse the acid-modified polyolefin (A) and the ethylene-$\alpha$-olefin-diene rubber (B). An alicyclic hydrocarbon solvent (C1) and an ester-based solvent or ketone-based solvent (C2) are preferable.

Examples of the alicyclic hydrocarbon solvent (C1) include cyclohexane, methylcyclohexane, ethylcyclohexane, and the like. Examples of the ester-based solvent or ketone-based solvent (C2) include ethyl acetate, propyl acetate, butyl acetate, methyl ethyl ketone, and the like. Among these, methylcyclohexane and methyl ethyl ketone are preferable. These may be used singly or in a combination of two or more.

The solvent (C) for use in the present invention may be a mixed solvent containing the alicyclic hydrocarbon solvent (C1) and the ester-based solvent or ketone-based solvent (C2). Using a mixed solvent of the alicyclic hydrocarbon solvent and the ester-based solvent or ketone-based solvent improves the solubility of the adhesive composition.

When the mixed solvent is used, the mass ratio of the alicyclic hydrocarbon solvent (C1) to the ester-based solvent or ketone-based solvent (C2), (C1)/(C2), is preferably within the range of 99/1 to 50/50, more preferably 95/5 to 60/40, and particularly preferably 90/10 to 70/30. If the amount of the alicyclic hydrocarbon (C1) is larger than the above range, the viscosity may be high, and coating unevenness may occur, resulting in a decrease in adhesion. When the alicyclic hydrocarbon (C1) in the above range is contained, the solubility of the resins is good.

The solvent (C) may be contained in an amount of 10 to 2000 parts by mass per 100 parts by mass of the acid-modified polyolefin (A). The amount of the solvent (C) is preferably 25 parts by mass or more and 1500 parts by mass or less, more preferably 50 parts by mass or more and 1000 parts by mass or less, even more preferably 100 parts by mass or more and 900 parts by mass or less, and still even more preferably 100 parts by mass or more and 800 parts by mass or less, per 100 parts by mass of the acid-modified polyolefin (A). When the amount of the solvent (C) is within the above range, it is advantageous in terms of production and transportation costs.

The adhesive composition of the present invention may contain various additives, such as plasticizers, curing accelerators, flame retardants, pigments, and antiblocking agents, in addition to the acid-modified polyolefin (A) and the ethylene-$\alpha$-olefin-diene rubber (B), as long as the performance of the present invention is not impaired.

Adhesive Composition

The adhesive composition of the present invention preferably contains the acid-modified polyolefin (A) and the ethylene-$\alpha$-olefin-diene rubber (B) in a total amount of 5 mass% or more and 40 mass% or less. The total amount of the acid-modified polyolefin (A) and the ethylene-$\alpha$-olefin-diene rubber (B) in the adhesive composition is more preferably 7 mass% or more, even more preferably 10 mass% or more, and particularly preferably 13 mass% or more. The total amount of the acid-modified polyolefin (A) and the ethylene-$\alpha$-olefin-diene rubber (B) in the adhesive composition is also preferably 40 mass% or less, more preferably 35 mass% or less, even more preferably 30 mass% or less, and particularly preferably 25 mass% or less. When the total amount of the acid-modified polyolefin (A) and the ethylene-$\alpha$-olefin-diene rubber (B) in the adhesive composition is within the above range, the storage stability is good, and the coating properties tend to be good.

The curing agent is not particularly limited and generally refers to a known curing agent. Examples include epoxy curing agents, isocyanate curing agents, oxazoline group-containing or carbodiimide group-containing compounds, silane coupling agents, and the like.

Laminate

The laminate of the present invention is one in which a polyolefin resin substrate 1, and a polyolefin substrate 1 or a different type of substrate 2 are laminated using the adhesive composition of the present invention. The different type of substrate 2 is a substrate different from the polyolefin substrate 1. For example, if the polyolefin substrate 1 is polypropylene, the different type of substrate 2 is an ABS resin, a polycarbonate, or the like other than polypropylene.

The laminate of the present invention is useful, for example, for vehicle parts, such as automobile parts (e.g., bumpers, instrument panels, trim, and garnishes) and interior materials of bullet trains; home appliance parts such, as TVs, washing machines, refrigerator parts, air conditioner parts, and vacuum cleaner parts; mobile devices and communication devices, such asmobile phone devices and notebook computers; touch panels for various devices; and daily necessities.

The lamination may be performed using a previously known laminate production technique. Although there is no particular limitation, for example, the adhesive composition may be applied to the surface of a substrate using a suitable coating means, such as an applicator or a bar coater, followed by drying. After drying, another substrate may be stacked and bonded (laminate bonding or heat seal bonding) to the coating surface while the layer of the adhesive composition (adhesive layer) formed on the surface of the substrate is in a molten state, to thus obtain a laminate. Sufficient adhesion can be ensured when either laminate bonding or heat seal bonding is used as the method for producing the laminate.

The thickness of the adhesive layer formed from the adhesive composition is not particularly limited, and is preferably 0.5 to 60 $\mu$m, more preferably 1 to 50 $\mu$m, and even more preferably 2 to 40 $\mu$m.

Polyolefin Resin Substrate: Film

The polyolefin resin substrate may be suitably selected from previously known polyolefin resins. For example, polyethylene, polypropylene, ethylene-propylene copolymers, and the like may be used without limitation. Among these, it is preferable to use a cast polypropylene film (also referred to below as "CPP"). The thickness of the polyolefin resin substrate is not particularly limited, and is preferably 20 to 100 $\mu$m, more preferably 25 to 95 $\mu$m, and even more preferably 30 to 90 $\mu$m. The polyolefin resin substrate may contain a pigment and various additives or may be subjected to surface treatment, if necessary.

Polyolefin Resin Substrate: Molded Article

The polyolefin resin substrate may be suitably selected from previously known polyolefin resins. For example, polyethylene, polypropylene, ethylene-propylene copolymers, and the like may be used without limitation. Among these, it is preferable to use a polypropylene test plate. The thickness of the polyolefin resin substrate is not particularly limited, and is preferably 0.1 to 100 mm, more preferably 0.5 to 90 mm, and even more preferably 1 to 80 mm. The polyolefin resin substrate may contain a pigment and various additives or may be subjected to surface treatment, if necessary.

Different Type of Substrate: Molded Article

The different type of substrate may be a film or a molded article. ABS resins, polycarbonates, polyvinyl chloride, acrylic resins, Al foil, and the like can be used. Although there is no particular limitation, commercially available test plates can be used. The thickness of the different type of substrate is not particularly limited, and is preferably 0.1 to 100 mm, more preferably 0.5 to 90 mm, and even more preferably 1 to 80 mm. The different type of substrate may be subjected to surface treatment or may be untreated. In either case, comparable effects can be exhibited.

Examples

The present invention is described in detail below with reference to Examples; however, the present invention is not limited to these Examples.

Production Examples of Acid-Modified Polyolefin (A)

Production Example 1

100 parts by mass of polypropylene (Tm: 80°C; weight average molecular weight: 135,000), 150 parts by mass of toluene, 8.5 parts by mass of maleic anhydride, and 4 parts by mass of di-tert-butyl peroxide were placed in a 1-L autoclave. The mixture was heated to 140°C and then further stirred for 1 hour. After the reaction was completed, the reaction liquid was poured into a large amount of methyl ethyl ketone to deposit the resin. This resin was further washed several times with methyl ethyl ketone to remove unreacted maleic anhydride. The resulting resin was dried under reduced pressure to thus obtain a maleic anhydride-modified polypropylene (A-1; acid value: 12 mgKOH/g-resin; weight average molecular weight: 60,000; Tm: 80°C; heat of fusion: 31 J/g), which is an acid-modified polyolefin.

Production Example 2

A maleic anhydride-modified polypropylene (A-2; acid value: 12 mgKOH/g-resin; weight average molecular weight: 45,000; Tm: 80°C; heat of fusion: 33.5 J/g), which is an acid-modified polyolefin, was obtained in the same manner as in Production Example 1, except that another polypropylene (Tm: 80°C; weight average molecular weight: 45,000) was used in place of the polypropylene used in Production Example 1.

Production Example 3

A maleic anhydride-modified propylene-butene copolymer (A-3; acid value: 12 mgKOH/g-resin; weight average molecular weight: 90,000; Tm: 80°C; heat of fusion: 47.9 J/g), which is an acid-modified polyolefin, was obtained in the same manner as in Production Example 1, except that a propylene-butene copolymer (Tm: 83°C; propylene: 80 mol%; butene: 20 mol%) was used in place of the polypropylene used in Production Example 1.

Production Example 4

A maleic anhydride-modified propylene-butene copolymer (A-4; acid value: 12 mgKOH/g-resin; weight average molecular weight: 90,000; Tm: 95°C; heat of fusion: 55.7 J/g), which is an acid-modified polyolefin, was obtained in the same manner as in Production Example 1, except that a propylene-butene copolymer (Tm: 98°C; propylene: 85 mol%; butene: 15 mol%) was used in place of the polypropylene used in Production Example 1, and the amount of maleic anhydride was 12 parts by mass.

Example 1

83 parts by mass of the maleic anhydride-modified polypropylene (A-1) obtained in Production Example 1, 17 parts by mass of an ethylene-$\alpha$-olefin-diene rubber (EPDM) (B-1), 540 parts by mass of cyclohexane, and 60 parts by mass of methyl ethyl ketone were placed in a 500-ml four-necked flask equipped with a water-cooled reflux condenser and a stirrer. The mixture was heated to 70°C with stirring, followed by continuous stirring for 1 hour. The mixture was then cooled to obtain an adhesive composition 1. A laminate was produced using the adhesive composition 1 by the following method.

Production of Laminate of Polyolefin Resin Substrate and Polyolefin Resin Substrate or Different Type of Substrate (Heat Seal Bonding)

A cast polypropylene film (Pylen (registered trademark) Film-CT produced by Toyobo Co., Ltd.; thickness: 80 μm) (which may be referred to below as "CPP") was used as a polyolefin resin substrate. The obtained adhesive composition was applied to the polyolefin resin substrate with an applicator so that the film thickness of the adhesive layer after drying was 20 μm. The coating surface was dried with a hot air dryer at 100°C for 3 minutes to obtain the polyolefin resin substrate on which an adhesive layer having a film thickness of 20 μm was laminated. A polypropylene (PP) test plate (produced by Nippon Testpanel Co., Ltd.; thickness: 2 mm), an ABS test plate (produced by Nippon Testpanel Co., Ltd.: thickness: 2 mm), and a polycarbonate (PC) test plate (produced by Nippon Testpanel Co., Ltd.; thickness: 2 mm) were bonded to the surface of the adhesive layer at a heat-sealing temperature of 90°C (55°C on the test plate side) and 0.3 MPa for 15 seconds using a heat seal tester (TP-701-B) produced by Tester Sangyo Co., Ltd., followed by aging at room temperature for one day, thereby obtaining laminates. The adhesion in the obtained laminates was evaluated. Table 1 shows the results.

Table 1

| | | Composition of adhesive (mass%) | | | | | | | | | | |
|---|---|---|---|---|---|---|---|---|---|---|---|---|
| | | Example 1 | Example 2 | Example 3 | Example 4 | Example 5 | Example 6 | Example 7 | Example 8 | Comparative Example 1 | Comparative Example 2 | Comparative Example 3 |
| | | Adhesive composition 1 | Adhesive composition 2 | Adhesive composition 3 | Adhesive composition 4 | Adhesive composition 5 | Adhesive composition 6 | Adhesive composition 7 | Adhesive composition8 | Adhesive composition 9 | Adhesive composition 10 | Adhesive composition 11 |
| Acid-modified PO | A-1 | 100 | 100 | 100 | 100 | 100 | | | | 100 | 100 | |
| | A-2 | | | | | | 100 | | | | | |
| | A-3 | | | | | | | 100 | | | | |
| | A-4 | | | | | | | | 100 | | | |
| EPDM | B-1 | 20 | 10 | 80 | | | 50 | 20 | 20 | | 150 | 100 |
| | B-2 | | | | 20 | | | | | | | |
| | B-3 | | | | | 20 | | | | | | |
| Adhesion [N/15 mm] | PP | 17 | 17 | 8 | 17 | 16 | 15 | 12 | 13 | 5 | 6 | <0.1 |
| | ABS | 17 | 15 | 7 | 15 | 16 | 12 | 8 | 7 | 6 | 5 | <0.1 |
| | PC | 15 | 10 | 7 | 16 | 15 | 13 | 9 | 8 | 5 | 5 | <0.1 |
| Elongation at break of coating film [%GL] | | 600 | 630 | 400 | 580 | 560 | 450 | 540 | 540 | 650 | 300 | 100 |
| Comprehensive evaluation | | A | A | B | A | A | B | B | B | C | C | C |

EP 4 067 076 A1

Examples 2 to 11 and Comparative Examples 1 to 4

Adhesive compositions 2 to 11 were produced in the same manner as in Example 1, except that the acid-modified polyolefins (A) and the ethylene-α-olefin-diene rubbers (B) shown in Table 1 were used. Laminates were produced using the obtained adhesive compositions 2 to 11 in the same manner as in Example 1, and adhesion evaluation was performed. Table 1 shows the evaluation results.

The ethylene-α-olefin-diene rubbers (B) shown in Table 1 are as follows.

B-1: Trilene (registered trademark) 65 (Mw: 47,000; ethylene-propylene-diene rubber; diene component: 10 mass%) produced by Lion Elastomers
B-2: Trilene (registered trademark) 67 (Mw: 39,000; ethylene-propylene-diene rubber; diene component: 9.5 mass%) produced by Lion Elastomers
B-3: Trilene (registered trademark) 77 (Mw: 27,000; ethylene-propylene-diene rubber; diene component: 10.5 mass%) produced by Lion Elastomers

A laminate of a polyolefin resin substrate (CPP film) and an aluminum substrate (produced by Nippon Testpanel Co., Ltd.; thickness: 2 mm) was produced using the adhesive composition 1 of Example 1 by the method described in the production of a laminate (heat seal bonding) described above. The adhesive composition 1 achieved good adhesion (peel strength) of 10 N/15 mm. The adhesive compositions 2 to 11 also achieved good adhesion.

Analytical measurement and evaluation of the thus-obtained acid-modified polyolefins, stress relaxing agents, tackifiers, adhesive compositions, and laminates were performed in the following manner.

Measurement of Acid Value

The acid value (mgKOH/g-resin) in the present invention refers to the amount of KOH required to neutralize 1 g of acid-modified polyolefin (A), and was measured in accordance with the test method of JIS K0070 (1992). Specifically, 1 g of the acid-modified polyolefin was dissolved in 100 g of xylene adjusted to a temperature of 100°C, and then titrated with a 0.1 mol/L potassium hydroxide ethanol solution (trade name: 0.1 mol/L Potassium Hydroxide Ethanolic Solution, produced by Wako Pure Chemical Industries, Ltd.) using phenolphthalein as an indicator at the same temperature. The amount of potassium hydroxide required for titration was converted into milligrams to calculate the acid value (mgKOH/g).

Measurement of Weight Average Molecular Weight (Mw)

The weight average molecular weight in the present invention is a value measured with an Alliance e2695 gel permeation chromatograph (referred to below as "GPC"; standard substance: polystyrene resin, mobile phase: tetrahydrofuran, column: Shodex KF-806 and KF-803, column temperature: 40°C, flow rate: 1.0 ml/min, detector: photodiode array detector (wavelength: 254 nm = ultraviolet light)) produced by Nihon Waters K.K.

Measurement of Melting Point and Heat of Fusion

The melting point and heat of fusion in the present invention are values measured with a differential scanning calorimeter (referred to below as "DSC"; Q-2000 produced by TA Instruments Japan Inc.) from the top temperature and area of the melting peak when a sample is maintained at -50°C for 5 minutes, melted by heating at a rate of 10°C/min, maintained at 200°C for 2 minutes, cooled to -50°C at a rate of 10°C/min to achieve resinification, and melted again by heating at a rate of 10°C/min.

Evaluation of Adhesion

The laminates were cut into 15-mm strips, and adhesion was evaluated using a 180° peel test according to the following criteria.

In the 180° peel test, the peel strength was measured at a tensile rate of 50 mm/min at 25°C in accordance with the test method of ASTM-D1876-61 by using a Tensilon RTM-100 produced by Orientec Corporation. The average of two test values was defined as the peel strength (N/15 mm) between a polyolefin resin substrate and a different type of substrate.

The elongation of a coating film in the present invention was determined by preparing a cast film with a thickness of 50 μm and performing measurement at a tensile rate of 50 mm/min at 25°C by using a Tensilon RTM-100 produced by Orientec Corporation. The cast film was prepared in the following manner. Each of the obtained adhesive compositions was individually applied to a Teflon sheet with an applicator so that the film thickness of the adhesive layer after drying

was 50 μm. The coating surface was dried with a hot air dryer at 100°C for 10 minutes to obtain the Teflon sheet on which an adhesive layer having a film thickness of 50 μm was laminated. The coating film was peeled off from the Teflon sheet and cut to a size of 60 long × 15 mm wide. The distance between chucks (initial length of the coating film) was set to 30 mm, and the elongation was calculated according to the following formula.

```
{(length of coating film at break - initial length of coating
film)/initial length of coating film}×100(%)
```

Comprehensive Evaluation

From the evaluation of adhesion and elongation in the present invention, evaluation was performed according to the following criteria.

A: The average of adhesion (peel strengths) to the three substrates (PP, ABS, and PC) was 14 (N/15 mm) or more, and the elongation (elongation at break) was 550 (%GL) or more.
B: (i) The average of adhesion (peel strengths) to the three substrates (PP, ABS, and PC) was 7 (N/15 mm) or more, and the elongation (elongation at break) was less than 550 (%GL) and 350 (%GL) or more, or (ii) the average of adhesion (peel strengths) to the three substrates (PP, ABS, and PC) was less than 14 (N/15 mm) and 7 (N/15 mm) or more, and the elongation (elongation at break) was 550 (%GL) or more.
C: The average of adhesion (peel strengths) to the three substrates (PP, ABS, and PC) was less than 7 (N/15 mm), or the elongation (elongation at break) was less than 350 (%GL).

Industrial Applicability

The adhesive composition of the present invention contains an acid-modified polyolefin and a thermoplastic resin, and exhibits excellent adhesion between a nonpolar substrate, such as a polyolefin, and a different type of substrate, such as a polar substrate or a metal, even when no curing agent is used. Moreover, since the adhesive composition can be applied by using a dry lamination process, equipment costs can be reduced, and the film thickness can be made thin. Further, the adhesive composition exhibits excellent adhesion and good elongation even when heat bonding is performed at a low temperature of, for example, 90°C or less, at which the thermal shrinkage effect on polyolefin substrates is small. Thus, the adhesive composition of the present invention can be widely used as an adhesive for various applications, including for decorative films and paint films, in which various types of substrates are bonded together.

**Claims**

1. An adhesive composition comprising an acid-modified polyolefin (A) and an ethylene-α-olefin-diene rubber (B), the ethylene-α-olefin-diene rubber (B) being present in an amount of 1 to 100 parts by mass per 100 parts by mass of the acid-modified polyolefin (A).

2. The adhesive composition according to claim 1, wherein the ethylene-α-olefin-diene rubber (B) has a weight average molecular weight (Mw) of 1,000 or more and 100,000 or less.

3. The adhesive composition according to claim 1 or 2, wherein the acid-modified polyolefin (A) has an acid value of 2 to 50 mgKOH/g.

4. The adhesive composition according to any one of claims 1 to 3, further comprising a solvent (C).

5. The adhesive composition according to any one of claims 1 to 4, wherein the solvent (C) comprises an alicyclic hydrocarbon solvent (C1) and an ester-based solvent or ketone-based solvent (C2).

6. The adhesive composition according to any one of claims 1 to 5, wherein the mass ratio of the alicyclic hydrocarbon solvent (C1) to the ester-based solvent or ketone-based solvent (C2), (C1)/(C2), is 95/5 to 50/50.

7. The adhesive composition according to any one of claims 1 to 6 for use in bonding a polyolefin resin substrate 1 and a substrate 2 different from the substrate 1.

**8.** The adhesive composition according to any one of claims 1 to 7, wherein the acid-modified polyolefin (A) comprises propylene in an amount of 60 mol% or more.

**9.** A laminate comprising a polyolefin resin substrate 1 and a substrate 2 different from the substrate 1, the substrate 1 and the substrate 2 being bonded with the adhesive composition according to any one of claims 1 to 8.

## INTERNATIONAL SEARCH REPORT

| International application No. |
| --- |
| PCT/JP2020/042128 |

### A. CLASSIFICATION OF SUBJECT MATTER

B32B 27/00(2006.01)i; B32B 27/32(2006.01)i; C09J 109/00(2006.01)i; C09J 123/08(2006.01)i; C09J 123/26(2006.01)i; B32B 7/12(2006.01)i

FI:   C09J123/26; C09J109/00; C09J123/08; B32B27/00 104; B32B27/32 E; B32B7/12

According to International Patent Classification (IPC) or to both national classification and IPC

### B. FIELDS SEARCHED

Minimum documentation searched (classification system followed by classification symbols)

B32B27/00; B32B27/32; C09J109/00; C09J123/08; C09J123/26; B32B7/12

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 3-35079 A (E.I. DU PONT DE NEMOURS AND COMPANY) 15 February 1991 (1991-02-15) page 5, lower right column, line 6 to page 6, upper right column, line 20, page 7, upper left column to upper right column, page 5, lower left column, line 16 to page 6, lower right column, line 5 | 1-3, 7, 9 |
| A | page 5, lower fight column, line 6 to page 6, upper right column, line 20, page 7, upper left column to upper right column, page 5, lower left column, line 16 to page 6, lower right column, line 5 | 4-6, 8 |
| X | JP 8-504226 A (RAYCHEM CORPORATION) 07 May 1996 (1996-05-07) page 15, line 14 to page 19, line 5, page 9, lines 3-28 | 1-3, 7-9 |
| A | page 15, line 14 to page 19, line 5, page 9, lines 3-28 | 4-6 |
| X | JP 55-37350 A (TOYO SEIKAN CO., LTD.) 15 March 1980 (1980-03-15) claim 1, line 11, lower right column, line 12 to line 12, lower right column | 1-3, 7-9 |
| A | claim 1, line 11, lower right column, line 12 to line 12, lower right column | 4-6 |

☒ Further documents are listed in the continuation of Box C.   ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05 January 2021 (05.01.2021) | 19 January 2021 (19.01.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2020/042128 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 54-7453 A (CHEMPLEX COMPANY) 20 January 1979 (1979-01-20) entire text, all drawings | 1-9 |
| A | JP 55-25325 A (TOYO SEIKAN CO., LTD.) 23 February 1980 (1980-02-23) entire text, all drawings | 1-9 |
| A | JP 64-164 A (MITSUBISHI CABLE INDUSTRIES, LTD.) 05 January 1989 (1989-01-05) entire text, all drawings | 1-9 |
| A | JP 47-25282 A (E. I. DU PONT DE NEMOURS AND COMPANY) 19 October 1972 (1972-10-19) entire text, all drawings | 1-9 |
| A | JP 5-51496 A (BP CHEMICALS LIMITED) 02 March 1993 (1993-03-02) entire text, all drawings | 1-9 |
| A | JP 2002-527556 A (E.I. DU PONT DE NEMOURS AND COMPANY) 27 August 2002 (2002-08-27) entire text, all drawings | 1-9 |

Form PCT/ISA/210 (continuation of second sheet) (January 2015)

**INTERNATIONAL SEARCH REPORT**

Information on patent family members

International application no.

PCT/JP2020/042128

| Patent Documents referred in the Report | Publication Date | Patent Family | Publication Date |
|---|---|---|---|
| JP 3-35079 A | 15 Feb. 1991 | US 5053457 A column 5, line 55 to column 6, line 38, column 5, lines 41-53, table 1 EP 405789 A2 CN 1049678 A | |
| JP 8-504226 A | 07 May 1996 | WO 1994/012581 A1 page 10, line 33 to page 14, line 13, page 5, line 28 to page 6, line 10 EP 672090 A1 | |
| JP 55-37350 A | 15 Mar. 1980 | (Family: none) | |
| JP 54-7453 A | 20 Jan. 1979 | US 4087587 A entire text, all drawings | |
| JP 55-25325 A | 23 Feb. 1980 | (Family: none) | |
| JP 64-164 A | 05 Jan. 1989 | (Family: none) | |
| JP 47-25282 A | 19 Oct. 1972 | (Family: none) | |
| JP 5-51496 A | 02 Mar. 1993 | EP 479457 A1 entire text, all drawings KR 10-1992-0006460 A | |
| JP 2002-527556 A | 27 Aug. 2002 | US 2003/0203190 A1 entire text, all drawings WO 2000/022032 A1 EP 1131375 A CN 1323328 A KR 10-0579018 B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004292716 A
- JP 2014234400 A
- JP 2016089060 A